Europäisches Patentamt

European Patent Office

Office européen des brevets

(19)

(11) Numéro de publication : **0 585 333 B1**

(12) **FASCICULE DE BREVET EUROPEEN**

(45) Date de publication du fascicule du brevet :
15.03.95 Bulletin 95/11

(51) Int. Cl.⁶ : **G01B 9/02,** G01B 11/02,
G01D 5/26, G01N 21/45

(21) Numéro de dépôt : **92911527.7**

(22) Date de dépôt : **20.05.92**

(86) Numéro de dépôt international :
**PCT/FR92/00449**

(87) Numéro de publication internationale :
**WO 92/20990 26.11.92 Gazette 92/29**

(54) DISPOSITIF DE MESURE INTERFEROMETRIQUE EN OPTIQUE INTEGREE.

(30) Priorité : **21.05.91 FR 9106100**

(43) Date de publication de la demande :
**09.03.94 Bulletin 94/10**

(45) Mention de la délivrance du brevet :
**15.03.95 Bulletin 95/11**

(84) Etats contractants désignés :
**BE CH DE GB IT LI NL SE**

(56) Documents cités :
**WO-A-90/11484**
**DE-A- 3 911 474**
**FR-A- 2 613 826**
**FR-A- 2 638 847**

(73) Titulaire : **COMMISSARIAT A L'ENERGIE ATOMIQUE**
**31-33, rue de la Fédération**
**F-75015 Paris (FR)**

(72) Inventeur : **GIDON, Pierre**
**9, avenue du Grésivaudan**
**F-38130 Echirolles (FR)**
Inventeur : **VALETTE, Serge**
**41, rue des Eaux-Claires**
**F-38100 Grenoble (FR)**

(74) Mandataire : **Signore, Robert et al**
**c/o BREVATOME**
**25, rue de Ponthieu**
**F-75008 Paris (FR)**

## Description

La présente invention a pour objet un dispositif de mesure du type interféromètre pour la mesure d'une caractéristique d'un objet, destiné à fonctionner dans des structures d'optique intégrée. Ce dispositif permet en particulier de mesurer le déplacement d'un mobile ainsi qu'à déterminer le sens de déplacement de ce mobile ; il permet aussi la mesure de l'indice de réfraction d'un liquide ou d'un gaz.

L'invention trouve une application dans tous les domaines où l'on désire connaître la distance parcourue par un mobile ainsi que le sens de déplacement de ce mobile et en particulier dans les domaines spatiaux, aéronautiques, navals, en robotique ou sur les chaînes de montage d'un grand nombre d'objets (automobiles, appareils électroménagers, conditionnement d'aliments, ...) et de manière générale en métrologie dimensionnelle.

Elle trouve aussi une application dans tous les domaines où l'on désire connaître l'indice de réfraction d'un fluide. En particulier, la mesure de l'indice de réfraction d'un gaz peut permettre de déterminer la nature de ce gaz et sa concentration ; ceci est particulièrement intéressant dans le cas d'un gaz dangereux ou toxique mélangé à d'autres gaz. De même, la mesure de l'indice de réfraction d'un liquide peut permettre de déterminer sa nature et sa densité permettant ainsi de remonter à des paramètres comme le pH, la dilution ou la concentration.

Les techniques de traitement et/ou de transmission à distance de l'information, étudiées depuis quelques années, utilisent la transmission par ondes lumineuses dans des guides de lumière à structure plane. Ces guides sont constitués d'une couche guidante, intercalée entre deux milieux présentant des indices de réfraction inférieurs à celui de la couche guidante ; l'air constitue généralement l'un des deux milieux.

A chaque guide optique on associe un indice effectif $n_e=c/v$ où $v$ représente la vitesse de phase de la lumière dans la couche guidante et $c$ la vitesse de la lumière dans le vide. La valeur de l'indice effectif dépend de la valeur des différents indices des couches constituant ce guide ainsi que de leurs épaisseurs. Il en résulte, en optique intégrée, que la vitesse d'une onde lumineuse peut être modifiée soit par des variations d'indice des différentes couches en présence, soit par variation de leur épaisseur.

Les capteurs de déplacement ainsi que les dispositifs de mesure d'indice de réfraction des fluides actuellement utilisés en optique intégrée sont des interféromètres du type Michelson ou du type Mack Zehnder ; ils sont basés sur l'analyse d'un système d'interférence entre un faisceau de référence et un faisceau de mesure sur lequel est interposé l'objet à étudier. Les franges d'interférence sont représentatives soit du déplacement et du sens du déplacement du mobile, soit de l'indice de réfraction du fluide à étudier.

Le document FR-A-2 613 826 décrit un capteur de déplacement en optique intégrée du type interféromètre de Michelson. Ce type de capteur présente un certain nombre d'inconvénients. En particulier, afin de mesurer à la fois l'amplitude et le sens de déplacement du mobile, il est nécessaire de disposer de deux systèmes de franges d'interférence déphasés, si possible de $\pi/2$.

Techniquement, ceci n'est pas simple à réaliser surtout si l'on désire un capteur complètement passif. Compte tenu de cette complexité, les capteurs de déplacement intégrés utilisent tous un réglage actif du déphasage entre les deux systèmes de franges d'interférence.

Dans le document FR-A-2 613 826, le déphasage de $\pi/2$ est réglé dynamiquement en orientant le faisceau de mesure réfléchi par le miroir solidaire de l'objet. Ce réglage est fait une fois pour toute, ce qui limite le nombre d'applications de ce capteur. En effet, il faut que le miroir solidaire de l'objet se déplace toujours perpendiculairement au faisceau lumineux de mesure, incident.

Dans d'autres capteurs de déplacement intégrés connus, le déphasage du bras de référence est rendu actif en utilisant un déphaseur thermique ou un autre type de déphaseur.

Le document WO-90/11484 décrit aussi un capteur de déplacement en optique intégrée utilisant un déphaseur actif sur le bras de mesure, nécessitant une commande électrique dans le circuit optique.

L'inconvénient de tous les capteurs de déplacement en optique intégrée, connus est de faire intervenir un composant actif qui consomme de l'énergie et dont la réponse temporelle peut poser des problèmes. Un déphaseur thermique peut, en particulier présenter des dérives dans le signal lumineux délivré ainsi qu'un temps de montée trop important.

Pour remédier aux inconvénients dus à l'utilisation d'un composant actif dans le système d'interférence, on peut penser à réaliser un système de déphasage passif de $\pi/2$ entre les deux systèmes d'interférence. Malheureusement, un déphasage de $\pi/2$, du fait de la qualité des composants optiques intégrés dont la rectitude de bord n'est jamais meilleure que 40 à 50nm, ce qui représente un déphasage de l'ordre de 60° dans les configurations à miroirs et dans les dispositifs à microguides.

En résumé, tous les capteurs de déplacement en optique intégrée actuellement connus présentent des problèmes d'application limitée, de coût élevé ou de complexité. En outre, la précision dans la mesure est souvent insuffisante.

Aussi, l'invention a notamment pour objet un capteur de déplacement en optique intégrée du type interféromètre permettant de remédier à ces inconvénients.

On connaît par ailleurs par le document DE-A-3911474 un interféromètre en optique intégrée utilisant des microguides.

Dans les dispositifs d'optique intégrée de mesure d'indice de réfraction d'un fluide, on utilise aussi un réglage actif du déphasage entre les deux systèmes d'interférence (voir à cet effet le document FR-A-2 638 847). Les problèmes de fabrication et d'utilisation de ce type de déphasage sont les mêmes que ceux des capteurs de déplacement intégrés.

Aussi, l'invention a encore pour objet un dispositif optique intégré pour la mesure d'indice de réfraction d'un fluide permettant de remédier aux inconvénients de ceux de l'art antérieur.

De façon générale, l'invention a pour objet un dispositif de mesure par interférométrie d'une caractéristique d'un objet, en optique intégrée, comportant une source de lumière apte à émettre un faisceau lumineux d'entrée, des moyens de séparation à microguides pour séparer le faisceau lumineux d'entrée en un faisceau de référence et en un faisceau de mesure incident, un premier microguide optique pour véhiculer le faisceau de mesure incident vers l'objet, un second microguide optique pour véhiculer le faisceau de référence, un troisième microguide optique pour véhiculer le faisceau de mesure issu de l'objet, des moyens d'interférence utilisant des microguides pour faire interférer le faisceau de référence et le faisceau de mesure issu de l'objet et former au moins deux signaux d'interférence déphasés uniquement de façon passive, au moins deux détecteurs pour détecter ces signaux d'interférence et délivrer deux signaux électriques déphasés représentatifs de ces signaux d'interférence, les moyens de séparation, les premier, second et troisième microguides et les moyens d'interférence étant formés respectivement sur une structure guide intégrée sur un substrat, les moyens d'interférence à déphasage passif consistant en outre en un moyen choisi parmi les trous d'Young et un coupleur à trois voies au moins.

Lorsqu'on utilise des trous d'Young comme moyens d'interférence, on utilise au moins deux détecteurs et lorsqu'on utilise un coupleur à trois voies au moins comme moyens d'interférence, on utilise soit deux détecteurs, un détecteur associé à chaque voie extrême, soit trois détecteurs, avec un détecteur associé à chaque voie.

Avec les trous d'Young, on obtient un seul système d'interférence avec plusieurs franges et on détecte ce système dans deux zones différentes, avec au moins deux détecteurs, ce qui conduit à deux signaux électriques déphasés représentatifs de ce système unique d'interférence.

Avec un coupleur trois voies (ou plus), on obtient deux (ou plus) systèmes d'interférence déphasés que l'on détecte avec au moins deux détecteurs.

Les détecteurs peuvent être intégrés au substrat ou bien être indépendants du substrat. Ils peuvent consister en des photodiodes indépendantes ou mieux en des photodiodes multiples, notamment doubles ou triples suivant le type de moyens d'interférence utilisé.

L'utilisation de photodiodes multiples permet d'avoir un bon contrôle de la distance séparant les deux détecteurs, notée l, distance dont dépend le déphasage entre les deux systèmes d'interférence détectés lorsque les moyens d'interférence sont des trous d'Young.

Lorsque l'on utilise des photodiodes multiples et en particulier des trous d'Young comme moyens d'interférence, il faut savoir positionner de façon précise ces photodiodes par rapport aux moyens d'interférence, de façon qu'elles détectent au mieux les signaux d'interférence. En outre, le déphasage introduit entre les deux signaux électriques délivrés par les détecteurs dépend aussi de la distance séparant les moyens d'interférence et les détecteurs.

Aussi, en vue de faciliter le positionnement de ces détecteurs, il est possible de canaliser le ou les signaux d'interférence au niveau du circuit optique intégrée en interposant des absorbeurs entre les détecteurs et les moyens d'interférence. Grâce à ces absorbeurs, la distance séparant deux détecteurs et la longueur de la zone active de ces détecteurs peuvent être quelconques.

En effet, le ou les systèmes d'interférence détectés sont déterminés, dans ce cas, par la seule distance séparant les absorbeurs des sorties des microguides des moyens d'interférence. Cette distance peut être contrôlée avec précision car les microguides et les absorbeurs sont positionnés à partir de masques avec une superposition meilleure que 1µm.

De façon avantageuse, les moyens d'interférence sont agencés de façon que les détecteurs délivrent deux signaux déphasés de $\pi/2$. En effet, les trous d'Young donnent le déphasage que l'on veut et le coupleur trois voies donne un déphasage de $\pi/2$ qu'après traitement par soustraction des signaux détectés, décrit ultérieurement.

Selon l'invention, les moyens de séparation peuvent consister en un coupleur deux, trois voies ou plus ou en une jonction Y.

Une jonction Y est constituée de microguides définissant en vue de dessus un Y.

Un coupleur deux voies est constitué de deux microguides comportant une partie adjacente dont la longueur, appelée longueur de couplage, est définie à partir du coefficient de couplage.

Pour que ces deux microguides soient couplés, il faut que la distance séparant les deux axes longitudinaux des microguides soit inférieure à 10μm pour que les ondes évanescentes latérales puissent interagir. En pratique, cette distance est choisie entre 1 et 5μm.

La longueur de couplage (ou d'interaction) des deux microguides peut être comprise entre 50 μm et 1 cm. Pour obtenir une répartition de la lumière voisine de 50/50 dans chacun des microguides, on utilise généralement des longueurs d'interaction de 1 à 5 mm. Une jonction Y quant à elle répartit automatiquement les rayons lumineux à 50/50 dans chacune des branches du Y.

Un coupleur trois voies est constitué de trois microguides disposés selon une même direction. La longueur de couplage entre le microguide central et respectivement les deux microguides latéraux fixe la répartition des rayons lumineux dans chacun des microguides latéraux.

Avec un coupleur trois voies, la lumière est avantageusement injectée dans le microguide central en vue d'obtenir une répartition identique dans les deux microguides latéraux. En outre, la distance séparant le microguide central des microguides latéraux doit être inférieure à 10μm et être choisie en pratique entre 1 et 5μm. De plus, la longueur d'interaction avec chaque microguide latéral peut varier de 50 μm à 1 cm selon la forme du coupleur choisie.

Pour une répartition identique, on utilise généralement une longueur de couplage de 1 à 5 mm.

Le coupleur trois voies comme la jonction Y permet d'avoir une même proportion de lumière sur les deux voies latérales lorsque l'entrée de lumière se fait sur la voie centrale.

Par ailleurs, les jonctions Y n'introduisent aucun déphasage entre les deux faisceaux lumineux transmis par les deux branches du Y alors que les coupleurs deux voies introduisent un déphasage rigoureusement égal à $\pi$.

L'injection du faisceau de mesure issu de l'objet, dans le troisième microguide, peut être assurée en utilisant une lentille interposée d'une part entre la sortie du premier microguide et l'entrée du troisième microguide et, d'autre part, l'objet à étudier.

Afin d'assurer une totale indépendance entre le faisceau de mesure incident arrivant sur l'objet et le faisceau de mesure de retour issu de l'objet, les axes du premier et troisième microguides respectivement en leur extrémité de sortie et leur extrémité d'entrée sont espacés d'au moins 20μm et l'axe optique de la lentille passe entre ces deux microguides à égale distance de leur axe.

L'utilisation d'une voie aller de mesure et d'une voie de retour de mesure distinctes permet d'éviter le retour de lumière vers la source lumineuse et augmenter ainsi sa stabilité.

Il est toutefois possible de récupérer le faisceau lumineux issu de l'objet en sortie du premier microguide. Dans ce cas, l'extrémité de sortie du premier microguide et l'extrémité d'entrée du troisième microguide doivent être couplées selon le principe d'un coupleur deux ou trois voies. De plus, l'axe optique de la lentille placée en amont de l'objet doit être confondu avec l'axe longitudinal du premier microguide.

Le dispositif de mesure de l'invention peut être réalisé sur n'importe quel type de structure guide. En particulier, il peut être réalisé dans du verre, dans du niobate de lithium, dans des structures multicouches semiconductrices telles que des structures III-V ou II-VI.

Par exemple, on peut utiliser l'une des structures suivantes :
- verre/verre dopé par échange d'ions/$SiO_2$,
- $LiNbO_3$/$LiNbO_3$ dopé par diffusion de titane/$LiNbO_3$,
  dans ces deux premiers cas, la couche tampon est confondue avec le substrat,
- $Si$/$SiO_2$/$Si_3N_4$/$SiO_2$,
- $Si$/$SiO_2$/$SiO_xN_y$/$SiO_2$ avec $0<x<2$ et $0<y<4/3$,
- $Si$/$SiO_2$/$SiO_2$ dopé/$SiO_2$, les dopants de la couche guide étant tels que celle-ci a un indice de réfraction supérieur à celui des couches adjacentes, comme par exemple le phosphore, le germanium, le titane ou l'azote.

Il est en outre possible de remplacer la couche guide en $Si_3N_4$ par de l'alumine et/ou de doper la silice utilisée comme couche tampon et comme couche supérieure de la structure guidante par un dopant diminuant l'indice de réfraction de la silice tel que le fluor ou encore par un dopant augmentant l'indice de réfraction de la silice. Bien entendu, la couche guide doit toujours présenter un indice de réfraction supérieur à celui de la couche tampon et à celui de la couche supérieure associées.

Afin d'obtenir dans tous les cas des faisceaux monomodes et éliminer toute lumière parasite, il est possible d'utiliser des filtres spatiaux en entrée des premier, second et troisième microguides et en sortie du premier microguide.

Ces filtres spatiaux consistent en un microguide optique supporté par le substrat et présentant, selon un plan parallèle à la surface du substrat, au moins une partie courbe et deux absorbeurs de lumière disposés dans un même plan de part et d'autre de la partie courbe du microguide.

Selon l'invention, les différents absorbeurs du dispositif de mesure, aussi bien ceux des filtres spatiaux que ceux utilisés en sortie des moyens d'interférence, peuvent être réalisés soit en des polymères tels que des résines photosensibles ou des polymères (PMMA par exemple) dopés par des colorants, soit en des semi-conducteurs absorbants tels que Si, CdTe, GaAs suivant les longueurs d'onde d'utilisation, soit en un métal comme par exemple l'aluminium, le chrome, et l'or. Les matériaux utilisables sont notamment ceux de la demande de brevet français n° 90 073 049 déposée le 13 juin 1990 au nom du demandeur.

D'autres caractéristiques et avantages de l'invention ressortiront mieux de la description qui va suivre, donnée à titre illustratif et non limitatif, en référence aux dessins annexés, dans lesquels :

- la figure 1 représente schématiquement, en vue de dessus, un premier mode de réalisation d'un capteur de déplacement intégré conforme à l'invention,
- la figure 2 illustre, en perspective, une première variante du capteur de la figure 1,
- la figure 3 est une vue en coupe de la figure 2 selon la direction III-III,
- la figure 4 est une vue en coupe d'une seconde variante du capteur de déplacement de la figure 1,
- la figure 5 illustre, en perspective, une troisième variante du capteur de la figure 1,
- la figure 6 est une vue en coupe de la figure 5, selon la direction VI-VI,
- la figure 7 est une vue en coupe d'une quatrième variante du capteur de déplacement de la figure 1,
- la figure 8 représente schématiquement, en vue de dessus, un dispositif intégré de mesure de l'indice de réfraction, conforme à l'invention,
- la figure 9 représente une variante du dispositif de mesure de la figure 8,
- la figure 10 représente schématiquement, en vue de dessus, un second mode de réalisation d'un capteur de déplacement intégré conforme à l'invention,
- la figure 11 représente une partie agrandie de la figure 9 au niveau de la lentille d'injection de lumière, et
- la figure 12 représente schématiquement, en vue de dessus, un troisième mode de réalisation d'un capteur de déplacement intégré conforme à l'invention.

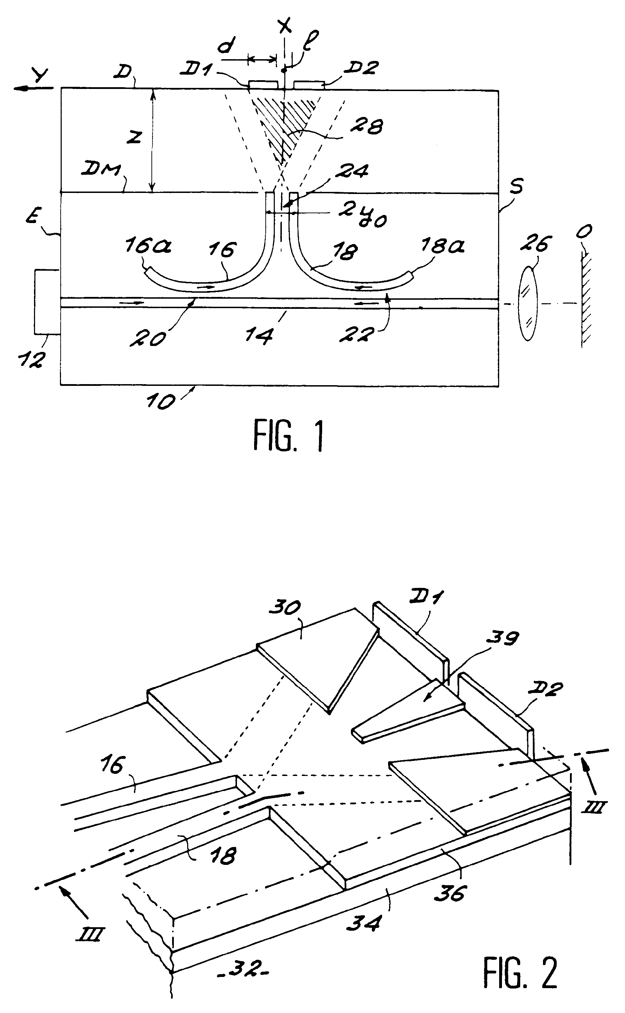

Le capteur de déplacement représenté sur la figure 1 comprend une structure guide 10 de forme parallélépipédique dont les faces d'entrée E et de sortie S sont rigoureusement parallèles et la face de détection D rigoureusement perpendiculaire aux faces d'entrée et de sortie. Ceci est obtenu par exemple par clivage d'un substrat monocristallin.

Le capteur comporte à son entrée E une source de lumière 12 notamment monochromatique du type diode laser. Ce faisceau de lumière est reçu par un premier microguide 14 dont les extrémités d'entrée et de sortie affleurent respectivement avec l'entrée E et la sortie S de la structure guide. Ce microguide 14 est orienté parallèlement à la face de détection D de la structure et est destiné à véhiculer le faisceau de mesure incident.

Le capteur comporte en outre un second microguide 16 et un troisième microguide 18 destinés respectivement à véhiculer le faisceau de référence et le faisceau de mesure issu de l'objet O à étudier, distant de la structure 10.

Les microguides 16 et 18 sont disposés de façon à assurer au niveau de leur entrée avec le microguide 14 des coupleurs deux voies respectivement 20 et 22.

A cet effet, les microguides 16 et 18 comportent chacun une partie adjacente au microguide 14.

La distance séparant le microguide 14 du microguide 16 au niveau du couplage 20 et la distance séparant le microguide 14 du microguide 18 au niveau du couplage 22 sont choisies dans la gamme de 1 à 10 μm et de façon préférentielle de 1 à 5 μm et la longueur d'interaction pour chaque coupleur 20 et 22, mesurée selon la direction du microguide 14 est choisie dans la gamme de 1 à 10 mm (typiquement de 1 à 5 mm). La réalisation et le fonctionnement des coupleurs deux voies sont bien connus de l'homme de l'art.

Par ailleurs, les microguides 16 et 18 sont agencés en leur sortie dans le plan fictif DM interne à la structure guide pour former un dispositif optique d'interférence 24 du type trou d'Young.

A cet effet, les sorties des microguides 16 et 18 sont quasi parallèles ; l'axe de chaque microguide peut former un angle de 0 à 20° par rapport à la direction X normale à la direction Y contenue dans le plan de détection D de la structure.

Pour des raisons de simplification dans les calculs, les axes de sortie des microguides 16 et 18 sont choisis parallèlement à cette direction X et on note 2yo la distance séparant ces deux axes.

Comme représenté sur la figure 1, le plan DM contenant les extrémités de sortie des microguides 16 et 18 est parallèle avec la face de détection D de la structure.

L'invention n'est bien entendu pas limitée au type de structure guide 10 représenté sur la figure 1. En effet, il est possible d'utiliser une structure dans laquelle la face de détection D est confondue avec la face d'entrée E ; les formes des microguides 16 et 18 sont alors modifiées.

Afin d'assurer l'injection de la lumière uniquement dans le microguide 14, l'extrémité d'entrée 16a du microguide 16 est écartée du microguide 14 et avantageusement distante de la source 12. De même, l'extrémité d'entrée 18a du microguide 18 est écarté du microguide 14 et avantageusement distante de la face S.

Une lentille 26 assure la collimation du faisceau de lumière sortant du microguide 14 vers l'objet O à étudier et inversement la focalisation de la lumière issue de l'objet vers l'extrémité de sortie du microguide 14.

L'objet O peut être un objet réfléchissant en lui-même, ou bien un objet non réfléchissant sur lequel on a fixé un miroir ; la lumière issue de l'objet est donc réfléchie.

Grâce aux coupleurs 20 et 22 à partition voisine de 50/50, on obtient en sortie des microguides 16 et 18 des faisceaux de référence et de mesure qui diffractent selon les principes d'Young et interfèrent dans une zone d'interférence 28 interne à la structure guide ; le signal d'interférence est en première approximation sinusoïdal.

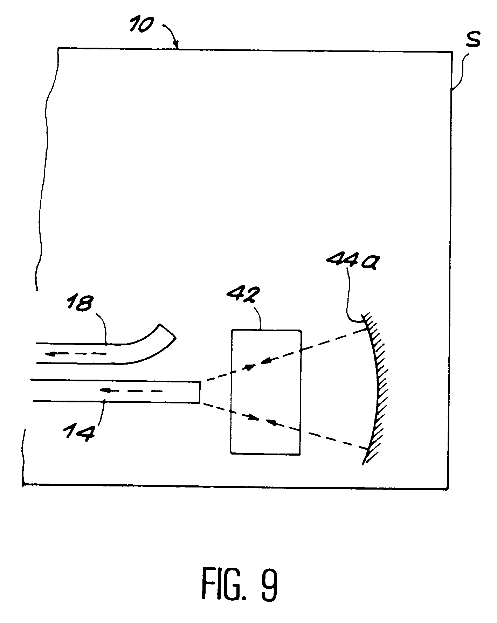

On place dans cette zone d'interférence, à une distance Z du plan de sortie ou de diffraction DM des microguides de la structure, deux photodiodes D1 et D2 de longueur d, séparées d'une distance I. Ces photodiodes sont ici accolées à la structure guide mais elles pourraient être intégrées à cette structure (figure 8).

On détecte ainsi deux zones du système d'interférence et on peut montrer que pour Z, d et I convenablement choisis, chaque détecteur reçoit un signal en déphasage de $\pi/2$ par rapport à L'autre.

Si a est l'amplitude des modes optiques diffractés par les microguides, on montre que les intensités électriques délivrées par les détecteurs D1 et D2, notées respectivement I1 et I2 sont proportionnelles à :

$$I1 \simeq a^2(a_1^2+a_2^2)d + \left[ \frac{4a^2 a_1 a_2 \lambda Z}{4\pi yo} \sin\left[\frac{4\pi dyo}{2\lambda Z}\right] \right] \times$$

$$\cos \frac{4\pi Y1yo + (4\pi dyo)/2}{\lambda Z} - \psi o$$

$$I2 \simeq a^2(a_1^2+a_2^2)d + \left[ \frac{4a^2 a_1 a_2 \lambda Z}{4\pi yo} \sin\left[\frac{4\pi dyo}{\lambda Z}\right] \right] \times$$

$$\cos \frac{4\pi Y1yo + (4\pi(3d+2l)yo)/2}{\lambda Z} - \psi o$$

avec a1 et a2 la proportion de l'amplitude lumineuse respectivement en sortie du microguide 16 et du microguide 18, $\lambda$ la longueur d'onde du faisceau émis par la source, $\psi o$ le déphasage entre les deux signaux électriques d'interférence émis par les photodiodes, Y1 l'ordonnée du début de la zone de détection du détecteur D1 selon l'axe Y dans le plan D des détecteurs (avec une origine prise dans le plan D préférentiellement entre D1 et D2), l, d, Z et yo ayant les significations données précédemment.

Ces calculs sont effectués selon la théorie de la diffraction en régime de Fraunhoffer qui dit que l'amplitude du champ électromagnétique dans le plan d'observation est la transformée de Fourier de l'amplitude du champ électromagnétique dans le plan de diffraction (ici dans le plan DM de sortie des microguides).

Les deux signaux I1 et I2 sont donc déphasés de

$$\Delta\psi = \frac{4\pi(d + l)yo}{\lambda Z}$$

On peut donc choisir d, I, yo et Z pour que $\Delta\psi=(2k+1)\pi/2$.

Il faut aussi prendre garde que le contraste des franges d'interférence ne soit pas nul et que le terme $\sin(2\pi dyo/\lambda Z)$ soit donc différent de 0.

Favorablement, il est souhaitable que ce terme soit maximum et donc que

$$(2\pi dyo/\lambda Z) = (2k' + 1)\pi/2$$

avec k' le plus petit possible et $l \leqq < d$.

k et k' sont des entiers $\geqq$ à 0, avec k≠k'.

En pratique, on montre qu'avec Z=1000µm, yo=5µm et λ=0,5µm, d ne peut pas être inférieure à une valeur dm=λZ/8yo, soit dm=12,5µm.

Il existe plusieurs solutions obéissant à cette dernière relation.

Exemple 1 : k = 1, k' = 0, ce qui entraîne d = 25µm et l = 12,5µm.

Exemple 2 : k = 3 et k' = 1, ce qui conduit à d = 75µm et l = 12,5µm.

Cet exemple 2 conduit à un contraste de frange beaucoup plus faible que celui obtenu pour l'exemple 1.

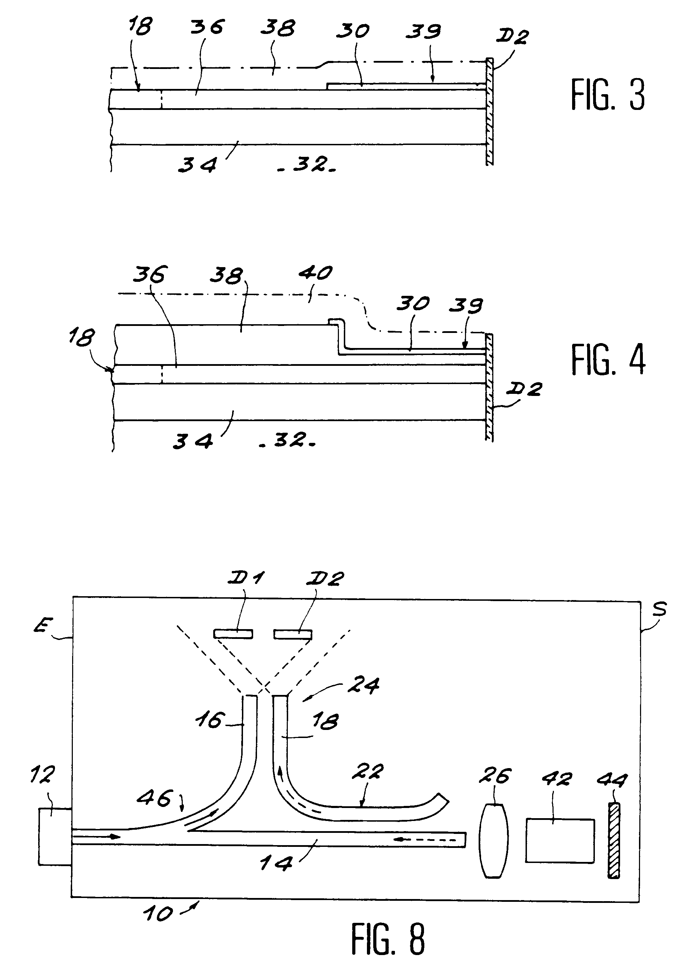

Sur la figure 2, on a représenté une première variante du capteur représenté sur la figure 1 et sur la figure 3, on a représenté une coupe selon la direction III-III du capteur de la figure 2.

Ce capteur se distingue de celui décrit précédemment par l'interposition d'absorbeurs 30 entre les détecteurs D1 et D2 d'une part et l'extrémité de sortie des microguides 16 et 18. Ces absorbeurs 30 font partie intégrante de la structure intégrée 10 et sont réalisés de façon avantageuse en métal.

Ces absorbeurs sont au nombre de trois et canalisent ainsi le système d'interférence respectivement vers les deux détecteurs D1 et D2.

Dans ces conditions, Z, l et d sont imposés par la position et les dimensions des absorbeurs 30 et les détecteurs peuvent avoir un écartement et des dimensions longitudinales quelconques. Dans ce cas, Z est la distance séparant le plan DM et le plan d'entrée des absorbeurs, d est la distance interabsorbeur au niveau de leur entrée et l la largeur de l'absorbeur central au niveau de son entrée.

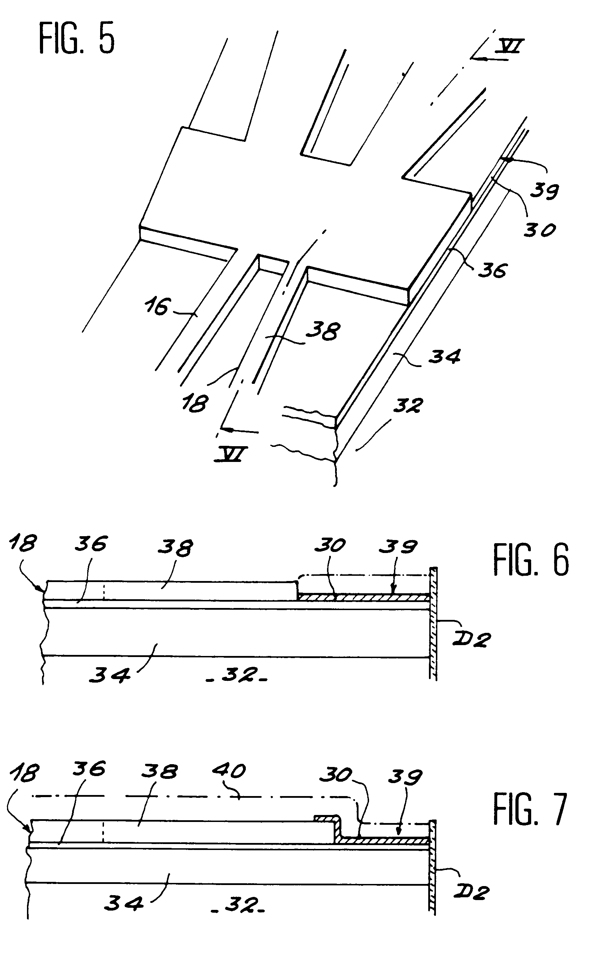

Selon l'invention, la structure guide 10 du capteur de l'invention peut présenter différentes variantes représentées sur les figures 2 à 7. Les figures 2 à 4 sont relatives à des structures à faible différence d'indice (< à 0,02) et les figures 5 à 7 sont relatives à des structures à forte différence d'indice (> à 0,1).

De façon commune, la structure guide 10 de l'invention comporte un substrat semi-conducteur 32 supportant une couche tampon 34, une couche guide 36 et une couche supérieure 38 ou superstrat. La couche guide 36 a un indice de réfraction supérieur à celui des couches 34 et 38.

A titre d'exemple, le substrat 32 est réalisé en silicium monocristallin et obtenu par clivage d'un bloc de silicium, la couche tampon 34 est en silice non intentionnellement dopée, la couche 36 est réalisée soit en silice dopée avec des dopants augmentant son indice de réfraction tels que le phosphore, le germanium, le titane ou l'azote (figures 2 à 4), soit en nitrure de silicium ou en alumine (figures 5 à 7) et la couche supérieure 38 est réalisée en silice non intentionnellement dopée. Cette couche 38, pour la clarté de la représentation, n'est pas représentée sur la figure 2 mais recouvre généralement toute la structure du type OIS2.

Pour une structure guide monomode (figures 2 à 4) du type Si/SiO$_2$/SiO$_2$ dopée/SiO$_2$, noté OIS2, la couche guidante 36 a une épaisseur allant de 0,5 à 8µm. Les couches 34 et 38 ont une épaisseur allant de 4 à 15µm pour assurer un bon isolement de la lumière de la couche guide par rapport au substrat et à l'air.

Dans la configuration (figures 5 à 7) du type Si/SiO$_2$/Si$_3$N$_4$/SiO$_2$, noté OIS1, la couche 36 de nitrure de silicium a une épaisseur de 50 à 250nm et par exemple de 165nm, la couche tampon une épaisseur de 2µm à 10µm et la couche supérieure 38 une épaisseur de 1µm à 5µm.

Les couches 34, 36 et 38 sont obtenues respectivement par dépôt chimique en phase vapeur assisté ou non par plasma (CVD ou PECVD).

Dans les structures guides OIS2 des figures 2 à 4, la couche guide 36 en silice dopée est gravée de façon à définir la forme et les dimensions des microguides 14, 16 et 18. Sur les figures 3 et 4, on a représenté en pointillé la limite du microguide 18.

Dans les structures guides 0IS1 des figures 5 à 7, c'est la couche supérieure 38 en silice non dopée qui est gravée selon le motif voulu des microguides.

La structure guide 10 peut en outre comporter une couche absorbante 39 gravée constituant en particulier les absorbeurs 30. Ces absorbeurs sont notamment réalisés en métal.

La structure guide OIS2 de l'invention, représentée sur les figures 2 à 4, est obtenue en déposant successivement la couche tampon 34 et la couche guide 36, puis en gravant la couche 36 (totalement ou partiellement) selon les motifs voulus pour former les microguides. On peut alors réaliser les absorbeurs de deux façons :

a) - déposer la couche absorbante 39 (en général métallique) puis la graver par exemple chimiquement pour former les absorbeurs 30. Déposer le superstrat 38 sur l'ensemble de la structure (figure 3). Cette méthode est bien sûr utilisable si le dépôt du superstrat 38 peut se faire sans détériorer la couche absorbante 39. Ceci est notamment possible avec les dépôts PECVD. Cette couche 39 est typiquement une couche métallique d'une épaisseur de 5 à 15nm.

Au lieu de déposer une couche absorbante 39 sur l'ensemble de la structure puis de la graver par exemple chimiquement, il est possible d'utiliser la technique du "lift off" bien connue de l'homme de l'art.

b) - déposer le superstrat 38 sur l'ensemble de la structure. Graver le superstrat 38 totalement ou partiellement suivant la forme désirée des absorbeurs 30. Déposer la couche absorbante 39 et la graver suivant la forme des absorbeurs 30 (figure 4).

Une couche de recouvrement 40 peut éventuellement être prévue pour protéger la couche métallique 39 des absorbeurs. Cette couche 40 est réalisée en un matériau d'indice de réfraction réel inférieur ou égal à celui constituant la couche supérieure 38. Elle présente une épaisseur de 8 à 15μm.

Pour une couche 38 en silice, on utilise en particulier pour la couche 40 une colle optique ou un gel de silice.

Les structures guides à forte différence d'indice du type OIS1, représentées sur les figures 5 et 6, sont obtenues en déposant successivement la couche tampon 34, la couche guide 36 puis la couche absorbante 39 que l'on grave totalement selon les motifs voulus pour former, entre autres, les absorbeurs 30.

Cette couche 39 est typiquement une couche métallique de 100 à 500nm.

On dépose ensuite la couche supérieure 38, dans des conditions ne détruisant pas la couche absorbante puis on la grave partiellement ou totalement pour former les microguides. Cette couche 38 peut ou non être gravée au-dessus des absorbeurs.

La structure guide à forte différence d'indice, représentée sur la figure 7 se distingue de celles représentées sur les figures 5 et 6 par le dépôt de la couche supérieure 38 juste après le dépôt de la couche guide, puis la gravure partielle ou totale de cette couche 38 selon les motifs voulus pour former les microguides et définir la forme des absorbeurs 30.

Après dépôt puis gravure de la couche absorbante, on dépose éventuellement une nouvelle couche 40 d'un diélectrique d'indice de réfraction réel au plus égal à celui de la couche 38.

Si l'on désire effectuer une mesure à distance en utilisant une source monochromatique distante de la structure guide 12 et couplée à celle-ci par des fibres monomodes, il est préférable d'utiliser la structure guide OIS2 (figures 2 à 4) en vue d'obtenir un coefficient de couplage élevé.

Sur la figure 8, on a représenté un dispositif de mesure de l'indice de réfraction d'un fluide, conforme à l'invention. Dans un tel dispositif, l'objet à étudier est fixe et non mobile comme dans un capteur de déplacement.

Dans ce mode de réalisation, on trouve une zone de mesure 42 destinée à être en contact avec le fluide dont on veut mesurer l'indice. Un miroir plan 44 disposé en arrière de la zone de mesure 42 permet de renvoyer le faisceau de mesure, via la zone 42 et la lentille 26, dans le microguide 14. La zone de mesure, le miroir plan et la lentille sont intégrés au substrat et sont obtenus par modification locale de l'indice effectif du mode guidé ; il n'y a pas de sortie de lumière hors de la structure guide.

En particulier, la lentille 26 et la zone de mesure 42 sont obtenues par gravure locale de la couche supérieure 38 alors que le miroir 44 est obtenu par gravure locale profonde des couches 38, 36 et 34. La lentille peut être du type Fresnel ou à saut d'indice. La zone de mesure 42 est non protégée.

Pour de plus amples détails concernant la réalisation de ce dispositif de mesure d'indice de réfraction, on peut se référer au document FR-A-2 638 847.

Ce dispositif de mesure se différencie en outre par rapport aux capteurs de déplacement par le fait que les microguides 14 et 16 définissent entre eux une jonction Y 46, l'axe de la queue du Y étant situé dans le prolongement de la source de lumière 12.

L'utilisation d'une jonction Y permet un partage 50/50 de l'intensité lumineuse entre le microguide 14 et le microguide 16.

Bien entendu, il serait possible d'équiper ce dispositif de mesure d'un coupleur deux voies 20, comme représenté sur la figure 1 ou d'un coupleur à trois voies.

Par ailleurs, dans ce mode de réalisation, les détecteurs D1 et D2 sont intégrés à la structure guide 10. Cette intégration peut être réalisée comme décrit dans le document FR-A-2 578 986.

Avantageusement, l'association lentille-miroir de renvoi 26-44 peut être remplacée par un seul miroir de renvoi sphérique ou parabolique 44a, comme représenté sur la figure 9. Ceci est quasi obligatoire sur les structures à faible différence d'indice où la réalisation d'une lentille à ouverture raisonnable est très difficile.

Il est en outre possible de supprimer la lentille 26 et de former la zone d'interaction 42 sur l'extrémité de sortie du microguide 14 dépourvue dans cette zone 42 du superstrat, en particulier pour les structures OIS2.

Les structures à faible différence d'indice, par exemple du type OIS2, permettent de détecter des indices de réfraction N tels que N<Ng avec Ng l'indice de réfraction du matériau de la couche guide, par exemple N<1,45 à 1,50 pour la silice.

Pour les structures à forte différence d'indice, par exemple du type OIS2, les valeurs d'indice détectables N peuvent atteindre 1,8 à 1,9 dans le cas de couche guide en $Si_3N_4$ dont l'indice est proche de 2.

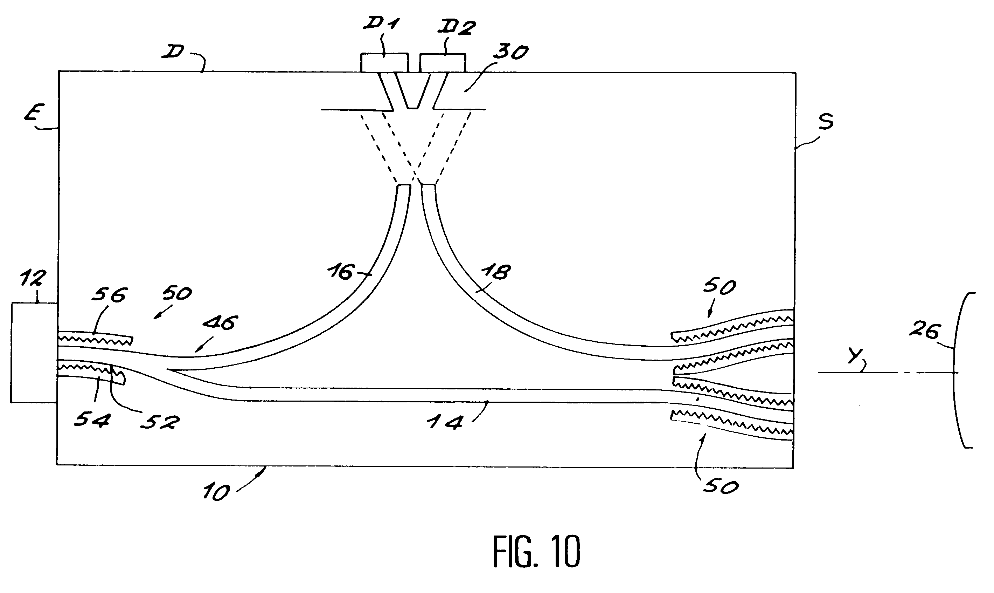

Sur la figure 10, on a représenté un autre mode de réalisation d'un capteur de déplacement conforme à l'invention. Ce capteur se distingue par rapport à celui représenté sur les figures 1 et 2 par l'utilisation d'une jonction Y 46 pour répartir la lumière incidente sur les deux microguides 14 et 16 et par l'utilisation de deux voies distinctes pour le faisceau de mesure incident et le faisceau de mesure réfléchi par l'objet O.

Pour ce faire, la sortie du microguide 14 et l'entrée du microguide 18 doivent être écartées l'une de l'autre ; la distance est au moins supérieure à 10μm, pour empêcher tout couplage entre ces deux microguides. De plus, l'axe optique de la lentille 26 doit être confondu avec la droite Y passant entre les microguides 14 et 18, à égale distance des axes de sortie de ces microguides.

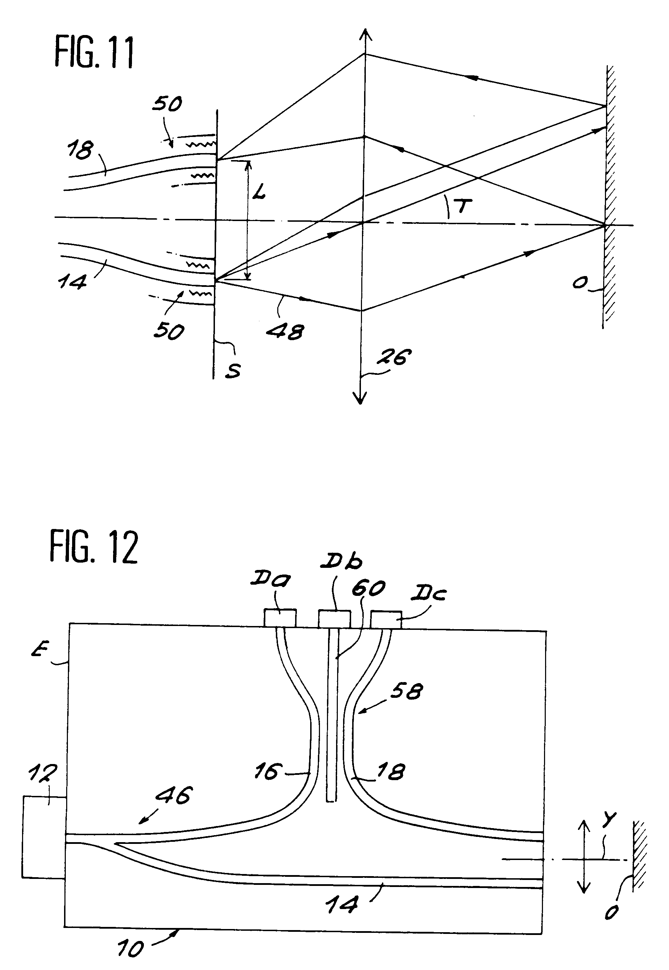

Ainsi, comme représenté sur la figure 11, la lumière sortant par le microguide 14 est collimatée par la lentille 26 puis réfléchie par l'objet O pour être focalisée par la lentille 26 sur l'entrée du microguide 18.

Pour une distance focale de la lentille de 1 à 5 mm, il faut que la distance L séparant l'axe des deux microguides 14 et 18 soit comprise dans la gamme allant de 20 à 50μm et que l'angle T compris entre la droite Y et le rayon lumineux le plus diffracté 48 sortant du microguide 14 soit choisi de 0,2 à 1° pour que les faisceaux incidents et les faisceaux de mesure réfléchis par l'objet soient transmis respectivement par les microguides 14 et 18.

Cet agencement peut bien sûr être prévu pour un dispositif de mesure de l'indice de réfraction.

Afin d'éliminer toute lumière parasite et obtenir des faisceaux lumineux de mesure monomodes, des filtres spatiaux 50 sont prévus en entrée du microguide 14 (plus exactement en amont de la jonction Y), en sortie du microguide 14 et en entrée du microguide 18.

Ces filtres spatiaux 50 sont constitués, dans le plan parallèle à la surface du substrat (plan de la figure 10), d'une partie courbe 52 de microguides le long de laquelle s'étendent deux absorbeurs de lumière 54 et 56. Ces absorbeurs présentent de façon avantageuse sur leur côté en regard du microguide, des dents espacées irrégulièrement et/ou décalées les unes par rapport aux autres de façon qu'il n'y ait pas de symétrie géométrique par rapport à l'axe longitudinal du microguide. La partie 52 présente en particulier la forme d'un S.

Pour de plus amples détails sur ces filtres spatiaux, on peut se référer à la demande de brevet français EN 90 073049 citée précédemment.

Les absorbeurs 54 et 56 sont réalisés en un même matériau que les masques optiques 30. Ainsi, lorsque le dispositif de l'invention comporte à la fois des filtres spatiaux 50 et des absorbeurs 30 en sortie des microguides 16 et 18, ces filtres et absorbeurs sont réalisés simultanément dans une même couche absorbante, selon le principe décrit précédemment en référence aux figures 2 à 7.

Au lieu d'utiliser une jonction Y en entrée du capteur de la figure 10, il est bien entendu possible, d'utiliser un coupleur deux voies 20 comme décrit en référence à la figure 1, ou un coupleur trois voies.

De plus, le mode de réalisation représenté sur la figure 10 comporte des absorbeurs 30 en sortie des microguides 16 et 18 mais il est tout à fait possible de ne pas les utiliser, comme représenté sur la figure 1.

Sur la figure 12, on a représenté un autre mode de réalisation d'un capteur de déplacement conforme à l'invention. Ce capteur de déplacement se distingue essentiellement de ceux décrits précédemment par l'utilisation d'un coupleur trois voies 58 au lieu des trous d'Young pour faire interférer les faisceaux de référence et de mesure, transmis respectivement par les microguides 16 et 18.

Ce coupleur trois voies 58 comporte un microguide central 60 orienté perpendiculairement à la surface de détection D de la structure guide 10 et disposé entre les microguides 16 et 18.

Dans la zone de couplage, les microguides 16 et 18 sont adjacents au microguide 60 et la distance séparant le microguide 60 respectivement des microguides 16 et 18 est comprise entre 1 et 10μm et de préférence entre 1 et 5μm.

Pour une partition identique de l'intensité lumineuse, entre le microguide 60 et le microguide 16 d'une part puis le microguide 60 et le microguide 18 d'autre part, on utilise une zone de couplage allant de 1 à 5mm.

Au niveau de la face de détection D, les microguides 16, 60 et 18 sont très écartés les uns des autres, d'une distance au moins supérieure à 10μm et typiquement de l'ordre de 20μm à 50μm pour éviter tout couplage.

Le microguide 60 est réalisé en même temps et de la même façon que les microguides 16 et 18.

Associés à ce coupleur trois voies 58, on utilise alors trois détecteurs Da, Db, Dc, disposés respectivement en regard des sorties des microguides 16, 60 et 18.

Les détecteurs Da, Db et Dc produisent un signal électrique respectivement d'intensité Ia, Ib et Ic, représentatif du signal d'interférence formé en aval de la face de détection et satisfaisant aux équations données ci-après.

$$- \text{Ia} = A + B\cos\psi + C\sin\psi$$
$$- \text{Ib} = 1 - (\text{Ia} + \text{Ic})$$
$$- \text{Ic} = A + B\cos\psi - C\sin\psi$$

Dans ces équations, A, B et C sont des coefficients de partage de la lumière qui dépend de la géométrie du coupleur et $\psi$ le déphasage entre le faisceau de mesure et le faisceau de référence.

En effectuant Ia-Ic, on obtient $2C\sin\psi$ alors que Ia+Ic donne $2A+2B\cos\psi$ et $\text{Ib}=a-(2A+2B\cos\psi)$.

On obtient ainsi deux systèmes de franges en quadrature de phase (déphasage de $\pi/2$) grâce aux pro-

priétés du coupleur trois voies.

Dans cette structure, Ia+Ic et Ia-Ic sont toujours déphasés de $\pi/2$ alors que dans les dispositifs à trous d'Young, le déphasage est de $\pi/2 \pm \varepsilon$ suivant les erreurs technologiques, $\varepsilon$ est inférieur à 10° dans la plupart des cas.

Au lieu d'utiliser un coupleur trois voies pour faire interférer le faisceau de référence et le faisceau de mesure, il est possible d'utiliser un coupleur à 4, voire 5 voies. La fabrication et le fonctionnement des coupleurs multivoies sont bien connus de l'homme de l'art.

Dans le mode de réalisation de la figure 12, la position des détecteurs n'est plus critique, du fait de l'emploi d'un coupleur trois voies ; il n'est donc plus nécessaire d'utiliser des absorbeurs 30 comme décrit à la figure 2 ; les détecteurs Da, Db et Dc sont placés respectivement en sortie des microguides 16, 60 et 18.

Dans le mode de réalisation de la figure 12, on a utilisé une jonction d'entrée Y 46, pour le partage de la lumière incidente entre le microguide 14 et le microguide 16, et un découplage de la voie incidente de mesure et de la voie de mesure de retour comme décrit à la figure 10.

Il est toutefois possible d'utiliser en entrée un coupleur deux voies 20 comme représenté sur la figure 1 ou trois voies et en sortie du capteur, un coupleur à au moins deux voies 22. En outre, il est possible d'utiliser des filtres spatiaux en entrée et en sortie des microguides 14, 16 et 18 comme décrit à la figure 10.

Enfin, il est possible d'utiliser un coupleur trois voies comme moyens d'interférence pour un dispositif de mesure de l'indice de réfraction d'un fluide tel que représenté sur la figure 8.

## Revendications

1.  Dispositif de mesure par interférométrie d'une caractéristique d'un objet, en optique intégrée, comportant une source de lumière (12) apte à émettre un faisceau lumineux d'entrée, des moyens (20, 46) de séparation à microguides pour séparer le faisceau lumineux d'entrée en un faisceau de référence et en un faisceau de mesure incident, un premier microguide optique (14) pour véhiculer le faisceau de mesure incident vers l'objet, un second microguide optique (16) pour véhiculer le faisceau de référence, un troisième microguide optique (18) pour véhiculer le faisceau de mesure issu de l'objet (O), des moyens d'interférence (24, 58) utilisant des microguides pour faire interférer le faisceau de référence et le faisceau de mesure issu de l'objet et former au moins deux signaux d'interférence déphasés uniquement de façon passive, au moins deux détecteurs (D1, D2, Da, Db, Dc) pour détecter ces signaux d'interférence et délivrer deux signaux électriques déphasés représentatifs de ces signaux d'interférence, les moyens de séparation (20, 46), les premier, second et troisième microguides (14, 16, 18) et les moyens d'interférence (24, 58) étant formés respectivement sur une structure guide intégrée sur un substrat (32), les moyens d'interférence à déphasage passif consistant en outre en un moyen choisi parmi les trous d'Young (24) et un coupleur à au moins trois voies (58).

2.  Dispositif selon la revendication 1, caractérisé en ce que des masques de lumière (30) sont prévus entre les moyens d'interférence et les détecteurs, pour limiter spatialement les signaux d'interférence, ces masques étant intégrés sur le substrat.

3.  Dispositif selon la revendication 1 ou 2, caractérisé en ce que les moyens de séparation consistent en un moyen choisi parmi un coupleur à au moins deux voies (20) et une jonction Y (46).

4.  Dispositif selon l'une quelconque des revendications 1 à 3, caractérisé en ce qu'un coupleur directif à au moins deux voies (22) couple la sortie du premier microguide et l'entrée du troisième microguide.

5.  Dispositif selon l'une quelconque des revendications 1 à 4, caractérisé en ce que les moyens d'interférence sont agencés de façon que les détecteurs délivrent deux signaux déphasés de $\pi/2$.

6.  Dispositif selon l'une quelconque des revendications 1 à 5, caractérisé en ce qu'un filtre spatial (50) est prévu en entrée du premier microguide.

7.  Dispositif selon l'une quelconque des revendications 1 à 6, caractérisé en ce que des filtres spatiaux (50) sont prévus en entrée du troisième microguide et en sortie du premier microguide.

8.  Dispositif selon l'une quelconque des revendications 1 à 7, caractérisé en ce qu'un élément optique de focalisation (26) est prévu en sortie du premier microguide et en entrée du troisième microguide.

9. Dispositif selon l'une quelconque des revendications 1 à 8 pour la mesure de la distance parcourue par un objet mobile et la détermination du sens de déplacement de ce mobile, caractérisé en ce qu'un miroir de renvoi solidaire de l'objet mobile est prévu.

10. Dispositif selon l'une quelconque des revendications 1 à 8 pour la mesure d'un indice de réfraction d'un fluide, caractérisé en ce qu'une zone d'interaction (42) de la structure guide est prévue pour être en contact avec le fluide, et en ce qu'un miroir (44) intégré sur le substrat est prévu en sortie de la zone d'interaction pour renvoyer le faisceau lumineux traversant ladite zone vers l'entrée du troisième microguide.

11. Dispositif selon l'une quelconque des revendications 2 à 10, caractérisé en ce que la structure guide comporte une couche tampon (34), une couche guide (36), une couche supérieure (38) empilées sur le substrat, et une couche (39) absorbant la lumière, la couche guide ayant un indice de réfraction supérieur à celui des couches tampon et supérieure, la couche supérieure ou la couche guide étant gravée de façon à fixer la forme des microguides, des moyens d'interférence et des moyens de séparation.

12. Dispositif selon la revendication 11, caractérisé en ce qu'un diélectrique (40) est prévu sur les microguides et la couche absorbante.

13. Dispositif selon la revendication 11 ou 12, caractérisé en ce que le substrat est un silicium, la couche tampon et la couche supérieure sont en silice non dopée ou dopée avec des dopants diminuant son indice de réfraction, la couche guide est en matériau choisi parmi la silice dopée avec un dopant augmentant son indice de réfraction, le nitrure de silicium ou l'alumine, et la couche absorbante est en un métal réfléchissant.

14. Dispositif selon l'une quelconque des revendications 6 à 13, caractérisé en ce que les filtres spatiaux consistent en un microguide optique supporté par le substrat et présentant, selon un plan parallèle à la surface du substrat, au moins une partie courbe (52) et deux absorbeurs de lumière (54, 56) disposés dans un même plan de part et d'autre de la partie courbe du microguide.

## Patentansprüche

1. Optisch integrierte, interferometrische Meßvorrichtung einer Charakteristik eines Objekts, umfassend eine Lichtquelle (12) zum Emittieren eines Eingangslichtbündels, Mikroleiter-Trenneinrichtungen (20, 46), um das Eingangslichtbündel aufzuteilen in einen Bezugsstrahl und einen Eintritts-Meßstrahl, einen ersten optischen Mikroleiter (14), um den Eintritts-Meßstrahl zum Objekt zu leiten, einen zweiten optischen Mikroleiter (16), um den Bezugsstrahl zu leiten, einen dritten optischen Mikroleiter (18), um den aus dem Objekt (O) austretenden Meßstrahl zu leiten, Interferenzeinrichtungen (24, 58), die Mikroleiter verwenden, um den Bezugsstrahls und den aus dem Objekt austretenden Meßstrahl zu interferieren und wenigstens zwei Interferenzsignale zu bilden, phasenverschoben, nur auf passive Weise, wenigstens zwei Detektoren (D1, D2, Da, Db, Dc), um diese Interferenzsignale zu detektieren und zwei für diese Interferenzsignale repräsentative phasenverschobene elektrische Signale zu liefern, wobei die Trenneinrichtungen (20,46), der erste, zweite und dritte Mikroleiter (14, 16, 18) und die Interferenzeinrichtungen (24, 58) jeweils ausgebildet werden in einer integrierten Leiterstruktur auf einem Substrat (32), wobei die Passiv-Phasenverschiebungs-Interferenzeinrichtungen außerdem gebildet wird durch eine Einrichtung, gewählt zwischen den Young-Spalten (24) und einem Koppler mit wenigstens drei Wegen (58).

2. Vorrichtung nach Anspruch 1, dadurch gekennzeichnet, daß Lichtmasken (30) vorgesehen sind zwischen den Interferenzeinrichtungen und den Detektoren, um die Interferenzsignale räumlich zu begrenzen, wobei diese Masken auf dem Substrat integriert sind.

3. Vorrichtung nach Anspruch 1 oder 2, dadurch gekennzeichnet, daß die Trenneinrichtungen gebildet werden durch Einrichtung, gewählt zwischen einem Koppler mit wenigstens zwei Wegen und einer Y-Verbindung (46).

4. Vorrichtung nach einem der Ansprüche 1 bis 3, dadurch gekennzeichnet, daß ein Richtkoppler mit wenigstens zwei Wegen (22) den Ausgang des ersten Mikroleiters und den Eingang des dritten Mikroleiters koppelt.

5. Vorrichtung nach einem der Ansprüche 1 bis 4, dadurch gekennzeichnet, daß die Interferenzeinrichtungen so angeordnet sind, daß die Detektoren zwei um $\pi/2$ phasenverschobene Signale liefern.

6. Vorrichtung nach einem der Ansprüche 1 bis 5, dadurch gekennzeichnet, daß ein räumliches Filter (50) vorgesehen ist als Eingang des ersten Mikroleiters.

7. Vorrichtung nach einem der Ansprüche 1 bis 6, dadurch gekennzeichnet, daß räumliche Filter (50) vorgesehen sind als Eingang des dritten Mikroleiters und als Ausgang des ersten Mikroleiters.

8. Vorrichtung nach einem der Ansprüche 1 bis 7, dadurch gekennzeichnet, daß ein optisches Fokussierungselement (26) vorgesehen ist als Ausgang des ersten Mikroleiters und als Eingang des dritten Mikroleiters.

9. Vorrichtung nach einem der Ansprüche 1 bis 8 zur Messung der von einem bewegliches Objekt durchlaufenen Distanz und zur Bestimmung der Bewegungsrichtung dieses mobilen Objekts, dadurch gekennzeichnet, daß ein fest mit dem beweglichen Objekt verbundener Reflexionsspiegel vorgesehen ist.

10. Vorrichtung nach einem der Ansprüche 1 bis 8 zur Messung eines Brechungsindex eines Fluids, dadurch gekennzeichnet, daß eine Wechselwirkungszone (42) der Leitstruktur dazu vorgesehen ist, in Kontakt zu sein mit dem Fluid, und dadurch, daß ein auf dem Substrat integrierter Spiegel (44) vorgesehen ist als Ausgang der Wechselwirkungszone, um den Lichtstrahl zu reflektieren, der die genannte Zone in Richtung Eingang des dritten Mikroleiters durchquert.

11. Vorrichtung nach einem der Ansprüche 2 bis 10, dadurch gekennzeichnet, daß die Leitstruktur, gestapelt auf dem Substrat, eine Pufferschicht (34), eine Leitschicht (36), eine Oberschicht (38) umfaßt, und eine lichtabsorbierende Schicht (39), wobei die Leitschicht einen größeren Brechungsindex hat als die Puffer- und die Oberschicht und die Ober- oder die Leitschicht geätzt werden zur Festlegung der Form der Mikroleiter, der Interferenzeinrichtungen und der Trenneinrichtungen.

12. Vorrichtung nach Anspruch 11, dadurch gekennzeichnet, daß ein Dielektrikum (40) vorgesehen ist auf den Mikroleitern und der Absorptionsschicht.

13. Vorrichtung nach Anspruch 11 oder 12, dadurch gekennzeichnet, daß das Substrat ein Silizium ist, die Pufferschicht und die Oberschicht aus Siliziumdioxid sind, nichtdotiert oder dotiert mit Dotierstoffen, die seinen Brechungsindex verkleinern, die Leitschicht ein Material ist, ausgewählt unter dem Siliziumdioxid, dotiert mit einem seinen Brechungsindex vergrößernden Dotierstoff, dem Siliziumnitrid oder dem Aluminiumoxid, und die Absorptionsschicht aus einem reflektierenden Metall ist.

14. Vorrichtung nach einem der Ansprüche 6 bis 13, dadurch gekennzeichnet, daß die räumlichen Filter gebildet werden durch einen optischen Mikroleiter, enthalten auf dem Substrat und, in einer zur Oberfläche des Substrats parallelen Ebene, wenigstens einen gebogenen Teil (52) aufweisend und zwei Lichtabsorber (54, 56), angeordnet in ein und derselben Ebene, beiderseits des gebogenen Teils des Mikroleiters.

## Claims

1. Device for measuring by interferometry a characteristic of an object, in integrated optics and having a light source (12) able to emit an entrance light beam, microguide splitting means (20, 46) for splitting the entrance light beam into a reference beam and an incident measuring beam, a first optical microguide (14) for carrying the incident measuring beam to the object, a second optical microguide (16) for carrying the reference beam, a third optical microguide (18) for carrying the measuring beam from the object (O), interference means (24, 58) using microguides for bringing about the interference of the reference beam and the measuring beam from the object and form at least two interference signals phase shifted in passive manner only, at least two detectors (D1, D2, Da, Db, Dc) for detecting the interference signals and supplying two phase shifted electric signals representative of the interference signals, the splitting means (20, 46), the first, second and third microguides (14, 16, 18) and the interference means (24, 58) being formed respectively on a guide structure integrated on a substrate (32), the interference means with passive phase shifting consisting of a means chosen from among Young double slits (24) and an at least three-channel coupler (58).

2. Device according to claim 1, characterized in that the light masks (30) are provided between the interference means and the detectors in order to spatially limit the interference signal, said masks being integrated onto the substrate.

3. Device according to claim 1 or 2, characterized in that the splitting means comprise a means chosen from among an at least two-channel coupler (20) and a Y junction (46).

4. Device according to any one of the claims 1 to 3, characterized in that an at least two-channel directional coupler (22) couples the exit of the first microguide and the entrance of the third microguide.

5. Device according to any one of the claims 1 to 4, characterized in that the interference means are arranged in such a way that the detectors supply two signals phase shifted by $\pi/2$.

6. Device according to any one of the claims 1 to 5, characterized in that a space filter (50) is provided at the entrance of the first microguide.

7. Device according to any one of the claims 1 to 6, characterized in that space filters (50) are provided at the entrance of the third microguide and at the exit of the first microguide.

8. Device according to any one of the claims 1 to 7, characterized in that an optical focusing element (26) is provided at the exit of the first microguide and at the entrance of the third microguide.

9. Device according to any one of the claims 1 to 8 for measuring the distance covered by a moving object and the determination of the displacement direction of said moving object, characterized in that a reflecting mirror integral with the moving object is provided.

10. Device according to any one of the claims 1 to 8 for measuring a refractive index of a fluid, characterized in that an interaction zone (42) of the guide structure is provided so as to be in contact with the fluid and in that a mirror (44) integrated on the substrate is provided at the exit of the interaction zone in order to reflect the light beam traversing said zone towards the entrance of the third microguide.

11. Device according to any one of the claims 2 to 10, characterized in that the guide structure has a buffer layer (34), a guide layer (36), an upper layer (38) stacked on the substrate and a light-absorbing layer (39), the guide layer having a refractive index higher than that of the buffer and upper layers, the upper layer or guide layer being etched so as to fix the shape of microguides, interference means and splitting means.

12. Device according to claim 11, characterized in that a dielectric (40) is provided on the microguides and the absorbing layer.

13. Device according to claim 11 or 12, characterized in that the substrate is of silicon, the buffer layer and the upper layer are of silica which is either undoped or doped with dopants decreasing its refractive index, the guide layer is of a material chosen from among silica doped with a dopant increasing its refractive index, silicon nitride or alumina and the absorbing layer is of a reflecting metal.

14. Device according to any one of the claims 6 to 13, characterized in that the space filters are constituted by an optical microguide supported by the substrate and having, along a plane parallel to the substrate surface, at least one curved portion (52) and two light absorbers (54, 56) located in the same plane on either side of the curved portion of the microguide.

FIG. 1

FIG. 2

FIG. 3

FIG. 4

FIG. 8

FIG. 5

FIG. 6

FIG. 7

FIG. 9

FIG. 10

FIG. 11

FIG. 12